# EUROPÄISCHE PATENTSCHRIFT

(11) **EP 2 844 973 B1**
(45) Veröffentlichungstag und Bekanntmachung des Hinweises auf die Patenterteilung: **27.04.2016**
(21) Anmeldenummer: 12721215.7
(22) Anmeldetag: 02.05.2012
(51) Int. Cl.: G01M 5/00

(54) **VERFAHREN ZUM ÜBERWACHEN EINER SCHÄDIGUNG EINER WELLE**
METHOD FOR MONITORING THE DAMAGE OF A SHAFT
PROCÉDÉ DE SURVEILLANCE DE DÉTERIORATION D'UN ARBRE

(43) Veröffentlichungstag der Anmeldung: 11.03.2015
(73) Patentinhaber: Siemens Aktiengesellschaft, 80333 München (DE)
(72) Erfinder: HASCHKE, Arno, 91056 Erlangen (DE); KLOS, Hans-Henning, 90537 Feucht (DE); SCHEIBNER, Dirk, 90473 Nürnberg (DE); SCHIMMER, Jürgen, 90473 Nürnberg (DE)
(86) Internationale Anmeldenummer: PCT/EP2012/057999
(87) Internationale Veröffentlichungsnummer: WO 2013/164019

(56) Entgegenhaltungen:
- JP-A- 2009 243 908
- WHITE R G ET AL: "Acoustic emission detection using a piezoelectric strain gauge for failure mechanism identification in cfrp", COMPOSITES, IPC BUSINESS PRESS LTD. HAYWARDS HEATH, GB, Bd. 10, Nr. 2, 1. April 1979 (1979-04-01), Seiten 101-109, XP024037776, ISSN: 0010-4361, DOI: 10.1016/0010-4361(79)90011-9 [gefunden am 1979-04-01]
- ELFORJANI M ET AL: "Detecting natural crack initiation and growth in slow speed shafts with the Acoustic Emission technology", ENGINEERING FAILURE ANALYSIS, PERGAMON, GB, Bd. 16, Nr. 7, 1. Oktober 2009 (2009-10-01), Seiten 2121-2129, XP026268648, ISSN: 1350-6307, DOI: 10.1016/J.ENGFAILANAL.2009.02.005 [gefunden am 2009-02-10]

## Beschreibung

Die vorliegende Erfindung betrifft ein Verfahren zum Überwachen einer Schädigung einer Welle. Überdies betrifft die vorliegende Erfindung eine Vorrichtung zum Überwachen einer Schädigung einer Welle.

Wellen werden zur Übertragung einer Kraft bzw. eines Drehmoments verwendet und finden üblicherweise Verwendung in elektrischen Maschinen, Getrieben und Lagereinrichtungen. Um den Ausfall dieser Geräte zu vermeiden, sollte eine Schädigung der Welle überwacht werden, die beispielsweise infolge der mechanischen Beanspruchung der Welle entstehen kann. Auf diese Weise kann eine Überlastung der Welle und damit ein potentieller Bruch der Welle verhindert werden.

Um eine Belastung der Welle erfassen zu können, wird heute üblicherweise das auf die Welle wirkende Drehmoment gemessen. Zu diesem Zweck werden auf der Außenfläche der Welle Dehnmessstreifen angebracht bzw. aufgeklebt. Die Energiezufuhr und die Übertragung der Messdaten von der rotierenden Welle erfolgt dabei entweder über Schleifringe oder über Telemetrie. Eine direkte Erfassung der laufenden Schädigung der Welle erfolgt in der Regel aber nicht. Ein derartiger Gegenstand ist beispielsweise bereits aus der JP 2009 243908 A bekannt.

Es ist Aufgabe der vorliegenden Erfindung, die Schädigung einer Welle auf einfache Weise genauer überwachen zu können. Diese Aufgabe wird durch ein Verfahren gemäß Patentanspruch 1 und durch eine Vorrichtung gemäß Patentanspruch 8 gelöst.

Vorteilhafte Weiterbildungen der vorliegenden Erfindung sind in den Unteransprüchen angegeben.

Das erfindungsgemäße Verfahren zum Überwachen einer Schädigung einer Welle umfasst das Anordnen zumindest eines Dehnmessstreifens an einer Außenfläche der Welle, das Erfassen einer Verformung der Welle anhand eines Messsignals des zumindest einen Dehnmessstreifens und das Erfassen von Schallemissionen der Welle durch Auswerten des Messsignals im Ultraschallbereich.

Zunächst wird zumindest ein Dehnmessstreifen an der Welle angeordnet bzw. aufgebracht. Dies kann beispielsweise mit einem entsprechenden Spezialkleber erfolgen, der sich unter mechanischer Belastung möglichst wenig verformt. Der Dehnmessstreifen kann dazu entlang der Umfangsrichtung der Welle, entlang der axialen Richtung der Welle oder schräg dazu angeordnet werden. Infolge einer mechanischen Verformung der Welle wird auch der Dehnmessstreifen verformt, wodurch sich sein elektrischer Widerstand ändert. Die Änderung des elektrischen Widerstands kann beispielsweise mit einer entsprechenden Messbrücke erfasst werden.

Mit dem Dehnmessstreifen können zusätzlich Schallemissionen, welche in der Welle erzeugt werden, erfasst werden. Die Quelle solcher Schallemissionen bzw. Stresswellen sind Schädigungsereignisse im Wellenmaterial. Dieses Phänomen ist auch unter dem Begriff Acoustic Emission bekannt. Diese Schallemissionen, die in der Welle erzeugt werden und die sich im Material der Welle ausbilden, sind ein Indikator für eine fortlaufende Materialschädigung, beispielsweise Mikrorisse. Somit können mit einem Dehnmessstreifen, der üblicherweise zum Überwachen eines auf die Welle wirkenden Drehmoments verwendet wird, zusätzlich Schallemissionen erfasst werden. Damit kann auf einfache Weise eine fortlaufende Schädigung der Welle ermittelt werden. Somit müssen keine zusätzlichen Sensoren zum Erfassen der Schädigung der Welle verwendet werden. Damit ist erstmals zusätzlich zur Drehmomentbelastung auch die Zerstörung des Materialgefüges detektierbar. Mit dem zumindest einen Dehnmessstreifen wird damit eine direkte Erkennung einer Rissbildung an der Welle ermöglicht, wodurch eine Frühwarnung ermöglicht werden kann. Somit können ungeplante Stillstände vermieden werden.

Bevorzugt wird das Messsignal zum Auswerten in einem Frequenzbereich von 80 bis 150 kHz mit einem Bandpass gefiltert. Die Schallemissionen bzw. Acoustic Emission-Signale liegen üblicherweise im Frequenzbereich von 80 bis 150 kHz. Diese Frequenzen sind materialabhängig. Beispielsweise sind für Stahl Frequenzen von 110 kHz typisch. Um die Signalanteile dieser Schallemissionen aus dem Messsignal des Dehnmessstreifens zu extrahieren, ist eine Bandpassfilterung im Bereich der charakteristischen Frequenz des Materials der Welle vorgesehen. Zur Bandpassfilterung des Messsignals können dabei elektronische oder digitale Filter verwendet werden. Somit können die in der Welle erzeugten Schallemissionen auf einfache Weise erfasst werden.

In einer weiteren Ausführungsform wird zum Auswerten des Messsignals eine Hüllkurve des Messsignals ermittelt. Ein solches Hüllkurvensignal kann beispielsweise durch Gleichrichtung und Tiefpassfilterung der Messsignale ermittelt werden. Durch die Hüllkurve des Messsignals kann eine einfache Auswertung des Messsignals ermöglicht werden.

Bevorzugt werden die Schallemissionen in Abhängigkeit von der Zeit erfasst. Mit anderen Worten wird das Messsignal bzw. die in dem Messsignal erfassten Schallemissionen nach so genannten Schädigungsereignissen bzw. Events ausgewertet. Kennwert für die Schädigungsaktivität ist die so genannte Event-Rate, also die Anzahl der Acoustic Emission-Ereignisse pro Zeiteinheit. Somit kann eine fortschreitende Rissbildung in der Welle einfach und zuverlässig erfasst werden.

Bevorzugt wird anhand des Messsignals zusätzlich ein auf die Welle wirkendes Drehmoment bestimmt und die erfassten Schallemissionen in Abhängigkeit von dem auf die Welle wirkenden Drehmoment ausgewertet. Bei fortschreitendem Wellenriss wird die Biegesteifigkeit der Welle lageabhängig. Dies zeigt sich zunehmend im Verlauf des Drehmoments der Welle. Die Schallemissionen pro Zeiteinheit treten dann vor allem bei maximalem Drehmoment auf. Auf diese Weise lässt sich die Ursache der Schallemissionen bzw. Acoustic Emission-Ereignisse klassifizieren. Tritt eine Abhängigkeit der Schallemissionen von dem auf die Welle wirkenden Drehmoment auf, so ist als Ursache ein wachsender Riss in der Welle wahrscheinlich. Auf diese Weise kann besonders zuverlässig eine Schädigung, insbesondere eine Rissbildung, in der Welle erfasst werden.

Erfindungsgemäß wird das Messsignal zusätzlich in Abhängigkeit von einer Temperatur der Welle ausgewertet. Schallemissionen bzw. Acoustic Emission kann auch bei thermischer Ausdehnung des Materials durch innere Reibung entstehen. Deshalb sollte zusätzlich die Temperatur der Welle erfasst werden, um sicher zu gehen, dass die Acoustic Emission-Signale nur bei thermisch stabilem Zustand als Indikator für eine Überlastung der Welle gedeutet werden. Damit kann eine Schädigung der Welle besonders zuverlässig erfasst werden.

In einer weiteren bevorzugten Ausführungsform wird anhand des Messsignals zusätzlich ein Schaden eines mit der Welle mechanisch gekoppelten Lagers erfasst, wobei das Messsignal zum Erfassen des Schadens des Lagers in einem Frequenzbereich von 30 bis 50 kHz mit einem Bandpassfilter gefiltert wird. Zusätzlich zur Erfassung von Rissen an der Welle können durch Auswerten des Messsignals des Dehnmessstreifens auch hart angekoppelte Lager, insbesondere der Innenring des Lagers, überwacht werden. Ein bestehender Schaden kann anhand des Messsignals ebenfalls erfasst werden, wenn das Messsignal in einem Frequenzbereich, der unterhalb der Frequenzen der Schallemissionen liegt, ausgewertet wird. Beispielsweise kann das Messsignal des Dehnmessstreifens dazu in einem Bereich von 30 bis 50 kHz, insbesondere in einem Frequenzbereich um 40 kHz, gefiltert werden. Diese Frequenz ist abhängig von dem Material und den Abmessungen des Lagers. Damit kann auf einfache Weise mit einem Dehnmessstreifen, der an der Welle angeordnet ist, zusätzlich einen Schaden eines mit der Welle mechanisch gekoppelten Lagers erfasst werden. Damit ist auch eine Überwachung eines Schadens von weiteren Bauteilen denkbar, die mechanisch mit der Welle verbunden bzw. gekoppelt sind.

Dabei wird das Messsignal zum Erfassen des Schadens des Lagers bevorzugt in Abhängigkeit von einer Drehzahl der Welle ausgewertet. Besteht ein Zusammenhang zwischen dem Signalanteil des Messsignals, der auf einen Schaden des Lagers hindeutet, und der Drehzahl der Welle, so kann dies auf einen Schaden des Lagers hindeuten. Damit kann ein Schaden des Lagers zuverlässig bestimmt werden.

Die erfindungsgemäße Vorrichtung zum Überwachen einer Schädigung einer Welle umfasst zumindest einen Dehnmessstreifen, der an einer Außenfläche der Welle anbringbar ist, wobei eine Verformung der Welle anhand des Messsignals des zumindest einen Dehnmessstreifens erfassbar ist, und eine Erfassungseinrichtung, die dazu ausgebildet ist, durch Auswerten des Messsignals im Ultraschallbereich Schallemissionen der Welle zu erfassen.

Die zuvor in Zusammenhang mit dem erfindungsgemäßen Verfahren beschriebenen Vorteile und Weiterbildungen gelten in gleicher Weise für die erfindungsgemäße Vorrichtung.

Die vorliegende Erfindung wird nun anhand der beigefügten Zeichnungen näher erläutert. Dabei zeigen:
- FIG 1: eine schematische Darstellung einer Vorrichtung zum Überwachen einer Schädigung einer Welle;
- FIG 2: ein Messsignal eines Dehnmessstreifens in Abhängigkeit von der Zeit;
- FIG 3: ein bandpassgefiltertes Messsignal gemäß FIG 2; und
- FIG 4: ein Hüllkurvensignal des Messsignals gemäß FIG 3.

Die nachfolgend näher geschilderten Ausführungsbeispiele stellen bevorzugte Ausführungsformen der vorliegenden Erfindung dar.

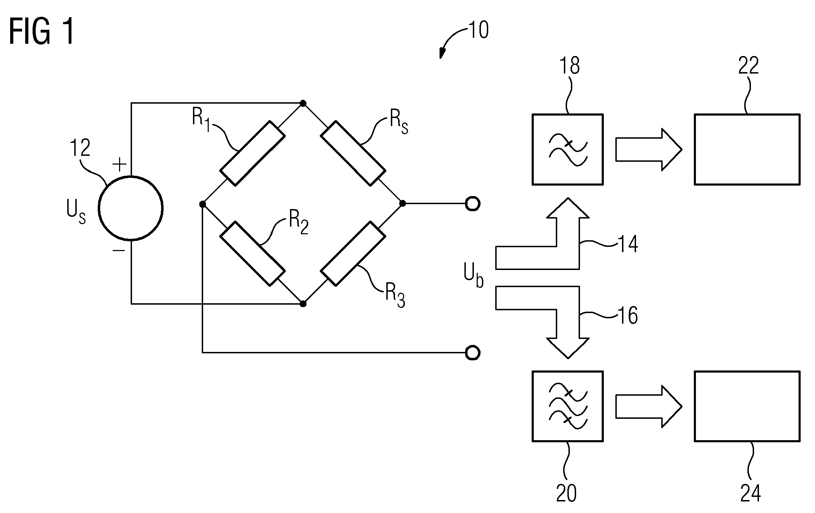

FIG 1 zeigt eine Vorrichtung 10 zum Überwachen einer Schädigung einer Welle. Die Vorrichtung 10 umfasst einen Dehnmessstreifen R_{S}, der vorliegend als elektrischer Widerstand dargestellt ist. Der Dehnmessstreifen Rₛ ist zusammen mit drei weiteren elektrischen Widerständen R₁, R₂ und R₃ gemäß einer Wheatstone-Brücke verschaltet. Die Brückenschaltung wird mit einer Versorgungsspannung Uₛ der Spannungsversorgung 12 versorgt. Das Messsignal U_{b} des Dehnmessstreifens Rₛ kann als Brückenspannung der Messbrücke abgegriffen werden.

An der hier nicht dargestellten Welle können ebenso mehrere Dehnmessstreifen Rₛ angeordnet sein. Der Dehnmessstreifen Rₛ kann beispielsweise als Widerstandsdraht auf einer Folie ausgebildet sein. Der Dehnmessstreifen Rₛ kann aus einem Metall oder aus einem Halbleiter gefertigt sein. Der Dehnmessstreifen Rₛ ist bevorzugt mit einem speziellen Klebstoff an der Außenfläche der Welle angebracht. Infolge einer mechanischen Verformung der Welle wird auch der Dehnmessstreifen Rₛ mechanisch verformt. Durch die mechanische Verformung ändert sich der elektrische Widerstand des Dehnmessstreifens Rₛ. Die Änderung des elektrischen Widerstands des Dehnmessstreifens Rₛ bewirkt eine Änderung des Messsignals U_{b}.

Vorliegend wird das Messsignal U_{b} aufgeteilt. Dies ist durch die Pfeile 14 und 16 verdeutlicht. Mit einem Tiefpassfilter 18 werden die hochfrequenten Signalanteile des Messsignals U_{b} gedämpft. Das tiefpassgefilterte Messsignal U_{b} wird einer Erfassungseinrichtung 22 zugeführt. Die Erfassungseinrichtung 22 ist dazu ausgebildet, in Abhängigkeit von dem tiefpassgefilterten Messsignal U_{b} das auf die Welle wirkende Drehmoment zu erfassen. Des Weiteren wird das Messsignal U_{b} mit einem Bandpassfilter 20 bandpassgefiltert. Dabei wird das Messsignal U_{b} bevorzugt in einem Frequenzbereich von 80 bis 150 kHz mit dem Bandpassfilter 20 gefiltert. Durch die Bandpassfilterung des Messsignals U_{b} in diesem Frequenzbereich können Schallemissionen in der Welle, die auch unter der Bezeichnung Acoustic Emission bekannt sind, erfasst werden. Das bandpassgefilterte Messsignal U_{b} wird einer zweiten Erfassungseinrichtung 24 zugeführt, mit der die Acoustic Emission-Signale ausgewertet werden können. Die Erfassungseinrichtungen 22 und 24 können ebenso als eine gemeinsame Erfassungseinrichtung ausgebildet sein.

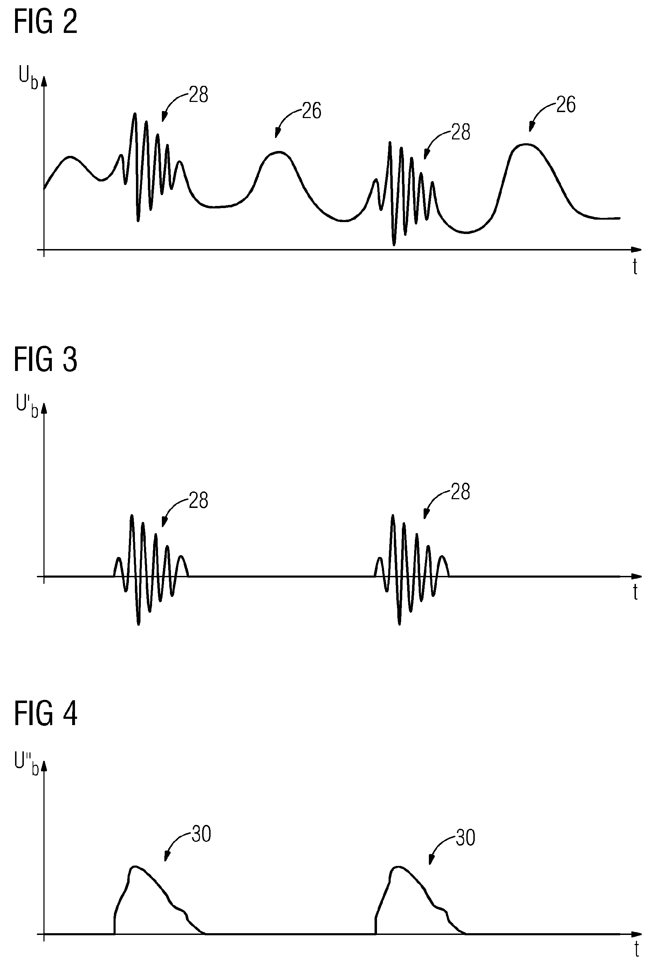

FIG 2 zeigt einen ersten Graph, in dem Amplitude des Messsignals U_{b} in Abhängigkeit von der Zeit t dargestellt ist. Über den zeitlichen Verlauf des Messsignals U_{b} sind niederfrequente Signalanteile, beispielsweise in den Bereichen 26, und hochfrequente Signalanteile, beispielsweise in den Bereichen 28, zu erkennen. Die hochfrequenten Signalanteile in den Bereichen 28 bilden sich infolge von Schallemissionen der Welle bzw. Acoustic Emission-Signalen in der Welle aus.

Um die hochfrequenten Signalanteile erfassen zu können, wird das Messsignal U_{b} mit dem Bandpassfilter 20 gefiltert. Beispielsweise wird das Messsignal U_{b} im Frequenzbereich zwischen 90 und 150 kHz bandpassgefiltert. Das bandpassgefilterte Messsignal U'_{b} ist in FIG 3 dargestellt. In dem bandpassgefilterten Messsignal U'_{b} sind nur noch die hochfrequenten Signalanteile in dem Bereichen 28 zu erkennen. Mit dem bandpassgefilterten Messsignal U'_{b} können die in der Welle erzeugten Schallemissionen einfach erfasst werden. Diese Schallemissionen bzw. Acoustic Emission-Signale können ein Anzeichen für eine fortlaufende Rissbildung der Welle sein.

FIG 4 zeigt eine Hüllkurve U"_{b} des bandpassgefilterten Messsignals U'_{b} gemäß FIG 3. Anhand der Hüllkurve U"_{b} des Messsignals U_{b} bzw. des bandpassgefilterten Messsignals U'_{b} können auf einfache Weise Schädigungsereignisse infolge von Schallemissionen erfasst werden. Zudem kann die so genannte Event-Rate, also die Anzahl der Acoustic Emission-Ereignisse pro Zeiteinheit, auf einfache Weise erfasst werden. Diese Schädigungsereignisse können in dem Hüllkurvensignal U"_{b} einfach erfasst werden. Diese sind in FIG 4 durch die Pfeile 30 verdeutlicht.

Das Messsignal U_{b}, das bandpassgefilterte Messsignal U'_{b} und die Hüllkurve U"_{b} können auch in Abhängigkeit von dem Drehmoment ausgewertet werden, das sich aus dem tiefpassgefilterten Messsignal U_{b} ergibt. Somit können Risse in der Welle besonders zuverlässig erfasst werden. Zusätzlich dazu wird die Temperatur der Welle bei der Auswertung des Messsignals U_{b} berücksichtigt. Zu diesem Zweck kann beispielsweise ein entsprechender Temperatursensor an der Welle angeordnet werden.

Zusätzlich dazu kann das Messsignal U_{b} in einem dritten Frequenzbereich, beispielsweise in einem Frequenzbereich zwischen 30 und 50 kHz, ausgewertet werden. Anhand eines in diesem Frequenzbereich bandpassgefilterten Messsignals U_{b} kann beispielsweise ein Schaden eines mit der Welle mechanisch gekoppelten Lagers erfasst werden. Somit können mit einem Dehnmessstreifen Rₛ das auf die Welle wirkende Drehmoment, Schallemissionen der Welle und Schädigungen eines mit der Welle mechanisch gekoppelten Elements erfasst werden.

### Bezugszeichenliste

- 10: Vorrichtung
- 12: Spannungsversorgung
- 14, 16: Pfeil
- 18: Tiefpassfilter
- 20: Bandpassfilter
- 22, 24: Erfassungseinrichtung
- 26: Bereich
- 28: Bereich
- 30: Pfeil

- R₁, R₂, R₃: Widerstand
- Rₛ: Dehnmessstreifen
- U_{b}: Messsignal
- U'_{b}: bandpassgefiltertes Messsignal
- U"_{b}: Hüllkurve
- t: Zeit

## Patentansprüche

1. Verfahren zum Überwachen einer Schädigung einer Welle durch
- Anordnen zumindest eines Dehnmessstreifens (Rₛ) an einer Außenfläche der Welle,
- Erfassen einer Verformung der Welle anhand eines Messsignals (U_{b}) des zumindest einen Dehnmessstreifens (Rₛ),
- Erfassen der Temperatur der Welle,
- Erfassen von Schallemissionen der Welle, die ein Indikator für eine Schädigung der Welle sind, durch Auswerten des Messsignals (U_{b}) im Ultraschallbereich,
wobei das Messsignal (U_{b}) zusätzlich in Abhängigkeit von der Temperatur der Welle ausgewertet wird.

2. Verfahren nach Anspruch 1, **dadurch gekennzeichnet, dass** das Messsignal (U_{b}) zum Auswerten in einem Frequenzbereich von 80 bis 150 kHz mit einem Bandpassfilter gefiltert wird.

3. Verfahren nach Anspruch 1 oder 2, **dadurch gekennzeichnet, dass** zum Auswerten des Messsignals (U_{b}) eine Hüllkurve (U"_{b}) des Messsignals (U_{b}) ermittelt wird.

4. Verfahren nach einem der vorhergehenden Ansprüche, **dadurch gekennzeichnet, dass** die Schallemissionen in Abhängigkeit von der Zeit (t) erfasst werden.

5. Verfahren nach einem der vorhergehenden Ansprüche, **dadurch gekennzeichnet, dass** anhand des Messsignals (U_{b}) zusätzlich ein auf die Welle wirkendes Drehmoment bestimmt wird und die erfassten Schallemissionen in Abhängigkeit von dem auf die Welle wirkenden Drehmoment ausgewertet werden.

6. Verfahren nach einem der vorhergehenden Ansprüche, **dadurch gekennzeichnet, dass** anhand des Messsignals (U_{b}) zusätzlich ein Schaden eines mit der Welle mechanisch gekoppelten Lagers erfasst wird, wobei das Messsignal (U_{b}) zum Erfassen des Schadens des Lagers in einem Frequenzbereich von 30 bis 50 kHz mit einem Bandpassfilter gefiltert wird.

7. Verfahren nach Anspruch 6 , **dadurch gekennzeichnet, dass** das Messsignal (U_{b}) zum Erfassen des Schadens des Lagers in Abhängigkeit von einer Drehzahl der Welle ausgewertet wird.

8. Vorrichtung (10) zum Überwachen einer Schädigung einer Welle mit
- zumindest einem Dehnmessstreifen (Rₛ), der an einer Außenfläche der Welle anbringbar ist, wobei
- eine Verformung der Welle anhand eines Messsignals (U_{b}) des zumindest einen Dehnmessstreifens (Rₛ) erfassbar ist, und mit
- einer Erfassungseinrichtung (22, 24), die dazu ausgebildet ist, durch Auswerten des Messsignals (U_{b}) im Ultraschallbereich Schallemissionen der Welle, die ein Indikator für eine Schädigung der Welle sind, zu erfassen
wobei die Temperatur der Welle erfassbar ist, und wobei das Messsignal (U_{b}) zusätzlich in Abhängigkeit von der Temperatur der Welle ausgewertet wird.

## Claims

1. Method for monitoring damage to a shaft, by means of
- arranging at least one strain gauge (Rₛ) on an outer surface of the shaft,
- detecting deformation of the shaft by using a measured signal (U_{b}) from the at least one strain gauge (Rₛ),
- detecting the temperature of the shaft,
- detecting sound emissions from the shaft, which are an indicator for damage to the shaft, by evaluating the measured signal (U_{b}) in the ultrasonic range,
wherein
the measured signal (U_{b}) is additionally evaluated as a function of the temperature of the shaft.

2. Method according to Claim 1, **characterized in that**, for the purposes of evaluation, the measured signal (U_{b}) is filtered with a band-pass filter in a frequency range from 80 to 150 kHz.

3. Method according to Claim 1 or 2, **characterized in that** an envelope curve (U"_{b}) of the measured signal (U_{b}) is determined in order to evaluate the measured signal (U_{b})

4. Method according to one of the preceding claims, **characterized in that** the sound emissions are detected as a function of time (t).

5. Method according to one of the preceding claims, **characterized in that**, by using the measured signal (U_{b}), a torque acting on the shaft is additionally determined, and the sound emissions detected are evaluated as a function of the torque acting on the shaft.

6. Method according to one of the preceding claims, **characterized in that**, by using the measured signal (U_{b}), damage to a bearing coupled mechanically to the shaft is additionally detected, the measured signal (U_{b}) being filtered with a band-pass filter in a frequency range from 30 to 50 kHz in order to detect the damage to the bearing.

7. Method according to Claim 6, **characterized in that** the measured signal (U_{b}) is evaluated as a function of a rotational speed of the shaft in order to detect the damage to the bearing.

8. Device (10) for monitoring damage to a shaft, having
- at least one strain gauge (Rₛ), which can be attached to an outer surface of the shaft, wherein
- deformation of the shaft can be detected by using a measured signal (U_{b}) from the at least one strain gauge (Rₛ), and having
- a detection means (22, 24), which is designed to detect sound emissions from the shaft, which are an indicator for damage to the shaft, by evaluating the measured signal (U_{b}) in the ultrasonic range wherein the temperature of the shaft can be detected, and wherein the measured signal (U_{b}) is additionally evaluated as a function of the temperature of the shaft.

## Revendications

1. Procédé pour surveiller une détérioration d'un arbre
- en positionnant au moins une jauge extensométrique (Rₛ) sur une surface extérieure de l'arbre,
- en détectant une déformation de l'arbre à l'aide d'un signal de mesure (U_{b}) de la au moins une jauge extensométrique (Rₛ),
- en détectant la température de l'arbre,
- en détectant des émissions sonores de l'arbre qui sont un indicateur pour une détérioration de l'arbre, par évaluation du signal de mesure (U_{b}) dans la gamme des ultrasons,
le signal de mesure (U_{b}) étant évalué en outre en fonction de la température de l'arbre.

2. Procédé selon la revendication 1, **caractérisé en ce que** pour l'évaluation dans une gamme de fréquences de 80 à 150 kHz, le signal de mesure (U_{b}) est filtré avec un filtre passe-bande.

3. Procédé selon la revendication 1 ou 2, **caractérisé en ce que** pour évaluer le signal de mesure (U_{b}), une enveloppante (U"_{b}) du signal de mesure (U_{b}) est déterminée.

4. Procédé selon l'une des revendications précédentes, **caractérisé en ce que** les émissions sonores sont détectées en fonction du temps (t).

5. Procédé selon l'une des revendications précédentes, **caractérisé en ce qu'**à l'aide du signal de mesure (U_{b}), est déterminé en outre un couple agissant sur l'arbre, les émissions sonores détectées étant évaluées en fonction du couple agissant sur l'arbre.

6. Procédé selon l'une des revendications précédentes, **caractérisé en ce qu'**à l'aide du signal de mesure (U_{b}), est détecté en outre un endommagement d'un palier couplé mécaniquement à l'arbre, le signal de mesure (U_{b}), pour détecter l'endommagement du palier, étant filtré avec un filtre passe-bande dans une gamme de fréquences de 30 à 50 kHz.

7. Procédé selon la revendication 6, **caractérisé en ce que** pour détecter l'endommagement du palier, le signal de mesure (U_{b}) est évalué en fonction d'une vitesse de rotation de l'arbre.

8. Dispositif (10) pour surveiller une détérioration d'un arbre, avec
- au moins une jauge extensométrique (Rₛ) pouvant être placée sur une surface extérieure de l'arbre,
- une déformation de l'arbre pouvant être détectée à l'aide d'un signal de mesure (U_{b}) de la au moins une jauge extensométrique (Rₛ), et avec
- des moyens de détection (22, 24), adaptés pour détecter des émissions sonores de l'arbre qui sont un indicateur pour une détérioration de l'arbre, par évaluation du signal de mesure (U_{b}) dans la gamme des ultrasons,
la température de l'arbre pouvant être détectée, et le signal de mesure (U_{b}) étant évalué en outre en fonction de la température de l'arbre.
